# EUROPEAN PATENT APPLICATION

(11) **EP 1 244 301 A2**
(43) Date of publication of application: **25.09.2002**
(21) Application number: 02251768.4
(22) Date of filing: 13.03.2002
(51) Int. Cl.: H04N 5/445

(54) **Television system**

(30) Priority: 15.03.2001 GB 0106395
(71) Applicant: Pace Micro Technology PLC, Shipley, West Yorkshire BD18 3LF (GB)
(72) Inventor: Matey, Jesus, Leeds, England LS4 2SZ (GB)
(74) Representative: Wood, Graham

(57) **Abstract**

A television system is provided including a broadcast data receiver (BDR) for receiving broadcast data from a remote location via cable, satellite or terrestrial means and processing the data. The processed data includes video data for display on a display screen (2) connected to or forming part of the BDR. A plurality of different video display formats are provided for user selection on the display screen and upon selection of a particular video display format a preview of the resulting video display is displayed in a window (6) on the display screen (2).

## Description

This invention relates to a television system comprising a broadcast data receiver connected to a display screen. The broadcast data receiver receives digital data in the form of audio, video and/or auxiliary data received from a broadcaster at a remote location. The broadcast data receiver processes the data and provides video and/or audio for viewing on the display screen and listening via speakers. Auxiliary data is typically used to provide an electronic programme guide (EPG) showing the available programmes for viewing by a user at a particular time.

It is known to be able to provide the video display on the display screen in a number of different display formats, such as having the display in a normal 4:3 format, a widescreen 16:9 format, letter box format, centre cut out format and/or the like. These different types of video display formats, which allow adjustment of the size and/or shape of the video display, are typically selectable by the user from a function selections menu and/or page. Conventionally the user is required to select a particular format from a menu page and then tune to the channel for display of the video display in the selected format.

A problem with the conventional method of selecting a particular video display format is that a user may not know what each of the different formats mean and how each format alters the appearance of the video display. The user therefore has to typically select each different format in turn and tune the video display to each particular format in order to determine whether the resulting video display size and/or shape is suitable. This is likely to be both time consuming and frustrating for the user. In addition, as the action in the film changes, the size and/or shape of the video display may also change, such that the user may not be able to compare the video display they had prior to selecting a particular format with the resulting video display after the format selection.

It is therefore an aim of the present invention to provide an improved means for allowing user selection of video display formats.

According to a first aspect of the present invention there is provided a television system including a broadcast data receiver (BDR) for receiving broadcast data from a remote location via cable, satellite or terrestrial means and processing said data, said processed data including video data for display on a display screen connected to or forming part of said BDR and characterised in that a plurality of different video display formats are provided for user selection on the display screen and wherein upon selection of a particular video display format a preview of the resulting video display is displayed in a window on the display screen.

Preferably the window containing the preview, typically a "picture in graphics" window, is displayed over the video display currently being broadcast on a user- selected channel. The dimensions of the preview window are adjustable by the user such that it covers a pre-determined portion or all of the existing video display being broadcast.

The advantage of the present invention is that video displayed on the display screen remains unchanged when either video is displayed in the preview window in a particular format or the format of the video displayed in the preview window changes.

Preferably each different video display format alters the size and/or shape of the resulting video display in the window.

Preferably the preview of the selected display comprises the selected format applied to video data currently being broadcast on any or any combination of a user-selected channel, a broadcaster selected channel, a default or selected video clip, a blank screen and/or the like.

Preferably control means are provided to allow user-selection of one or more functions of the television system and for selection of the different video display formats. The control means is typically a remote control handset.

In one embodiment the number of different video display formats are provided in a drop down menu of a Viewing Preference Screen, such as an Electronic Programme Guide (EPG) display.

Preferably the video display formats provided for user selection include any or any combination of a normal (4:3) display, a widescreen (16:9) display, picture handling, pass through, centre cutout, letterbox and/or the like.

In one embodiment the video display returns to a default video display format each time the television system is switched off and switched on again and/or after a pre-determined period of time. The pre-determined time period can be set by the broadcaster or the user.

In an alternative embodiment the video display format chosen by the user is maintained on all video displays until changed by the user.

According to a second aspect of the present invention there is provided a broadcast data receiver (BDR) for receiving broadcast data from a remote location via cable, satellite or terrestrial means and processing said data, said processed data including video data for display on a display screen connected to or forming part of said BDR and characterised in that a plurality of different video display formats are provided for user selection on the display screen and wherein upon selection of a particular video display format a preview of the resulting video display is displayed in a window on the display screen.

The video display surrounding or behind the preview window typically remains unchanged during preview of a display format.

According to a further aspect of the present invention there is provided an electronic programme guide (EPG) for display on a display screen of a television system, said EPG displaying data relating to one or more channels and/or programmes for broadcasting at that time or in the future, said EPG having a menu including a number of user-selectable preferences and characterised in that the user-selectable preferences include a plurality of different video display formats for user selection on the display screen and wherein upon selection of a particular video display format a preview of the resulting video display is displayed in a window on the display screen of the EPG.

Thus the present invention provides a means of allowing a user to quickly and easily view the effect of one or more video display formats prior to selecting a particular suitable format for application to a programme/video the user wishes to view.

An embodiment of the present invention will now be described with reference to the following description and the accompanying figures, wherein:
Figures 1-2 are examples of display screens for transmission of widescreen video content on a 4:3 television screen; and
Figure 3 is an example of a display screen for transmission of 4:3 video content on a widescreen television screen.

An EPG display 2 is provided with a drop down viewing preference menu 4, which allows a user to select a number of different functions for adjustment of the audio/video outputs of a current display. The viewing preference display has a Picture In Graphics (PIG) window 6 (also known as a picture in picture window) and a number of selectable fields 8. One of the options on the display is for changing the format (size and/or shape) of a video display.

The first selectable field 10, 10', 10" on the display requires user selection of the type of the user's television display screen, such as normal (4:3) or widescreen (16:9). The second user selectable field 12, 12', 12" contains a number of different video display shapes and/or sizes including "passthrough", "centre cutout" and "letterbox". The third user selectable field 14, 14', 14" contains selection of the video output to the television, such as RGB or composite. A fourth user selectable field 16, 16', 16" is provided for indicating whether subtitles or other features are provided with the video display.

The audio/video driver (data processor) of the television set or broadcast data receiver receives the user selected video display format settings and alters the video display in the PIG window 6 on the display screen 2 accordingly. The user can select any number of different combinations of display formats from the selectable fields and view the resulting change to the video display in the PIG window. This allows a user to quickly preview a number of possible formats prior to tuning a full video display to a chosen format. On selection of a particular video display in the preview window 6, the video content 7 being displayed on display screen behind the preview window remains unchanged, until a user requests that the display format in the preview window be used for the video display format of the video content 7 on the main display screen.

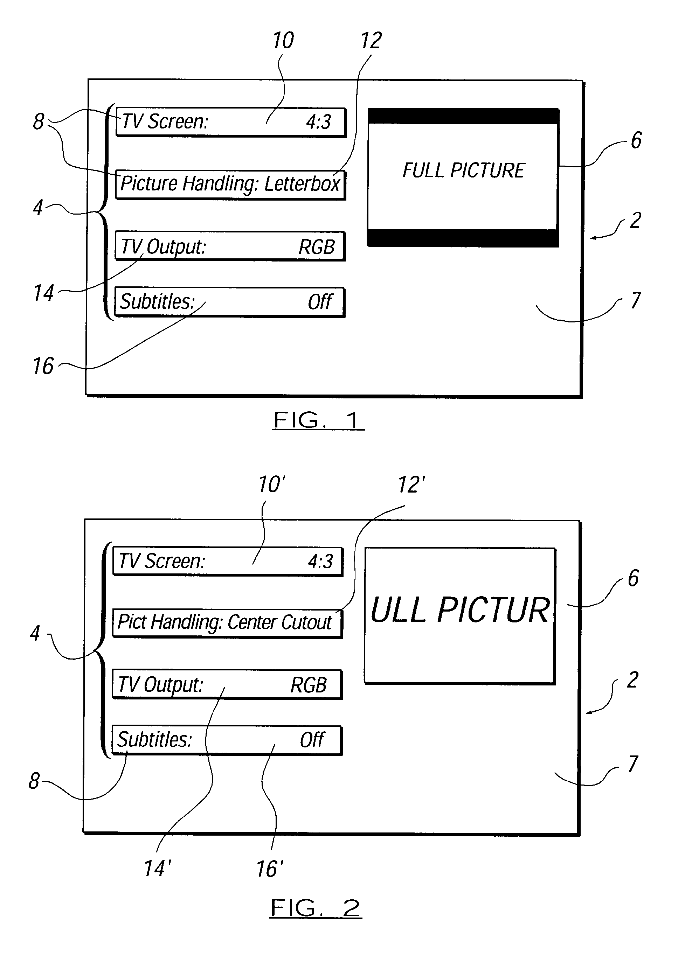

For example, if a user has a 4:3 normal television set and widescreen (16:9) video data is being transmitted to the broadcast data receiver, the user may select:
1) Letterbox - the left and right sides of the widescreen image are displayed at the left and right edges of the screen, whilst maintaining the image proportions. The PIG window shows how the video display includes a black margin at the top and bottom of the display, whilst providing the full widescreen video content with the correct shape (as shown in figure 1).
2) Centre Cutout - the top and the bottom of the widescreen image is displayed at the top and bottom of the screen, whilst maintaining image proportions. The image in the PIG window shows how the video display loses edges at the right and left hand sides of the image (as shown in figure 2).

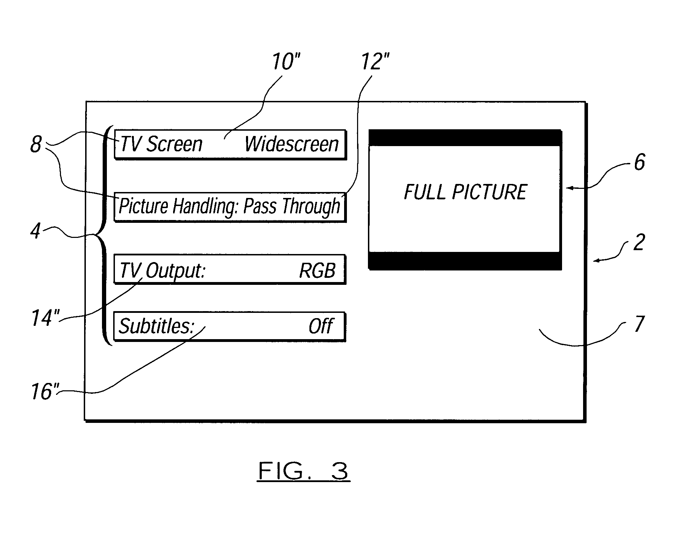

For example, if a user has a 16:9 television set and normal video content in 4:3 format is transmitted to the broadcast data receiver, the user may select:
3) Passthrough - all the contents of the 16:9 video display are fitted to the 4:3 screen and the PIG window shows the figures in the display having taller shapes compared to the video data being shown on a 16:9 television set (as shown in figure 3).

If the user changes the video display output format from RGB display format to composite video display format, the user can determine from the different PIG window displays the difference in quality, colour, graphics and video of the display.

A user can change the size of the preview window by inputting dimensions into an appropriate user input field in an EPG display menu or toolbar drop down menu using a remote control handset or other control means. Alternatively the user can click on the frame of the preview window to adjust the dimensions thereof.

Thus the present invention allows a user to scroll through and preview a number of different video display formats and determine at a glance which of the formats is most suitable for applying to a programme/video display.

## Claims

1. A television system including a broadcast data receiver (BDR) for receiving broadcast data from a remote location via cable, satellite or terrestrial means and processing said data, said processed data including video data for display on a display screen (2) connected to or forming part of said BDR and **characterised in that** a plurality of different video display formats are provided for user selection on the display screen (2) and wherein upon selection of a particular video display format a preview of the resulting video display is displayed in a window (6) on the display screen.

2. A television system according to claim 1 **characterised in that** the window (6) in which the preview is shown is displayed over a part of a video display currently being broadcast on a user selected channel.

3. A television system according to claim 1 **characterised in that** the video content (7) on the display screen (2) behind the preview window (6) remains unchanged following selection of a particular video display format in the preview window (6).

4. A television system according to claim 2 **characterised in that** the dimensions of the preview window (6) are adjustable by the user.

5. A television system according to claim 1 **characterised in that** each video display format alters the size and/or shape of the resulting video display in the preview window (6).

6. A television system according to claim 1 **characterised in that** the preview of the selected display comprises the selected format as applied to any or any combination of the video data currently being broadcast on a user-selected channel, a broadcaster selected channel, a default video clip, a user selected video clip or a blank screen.

7. A television system according to claim 1 **characterised in that** the plurality of different video display formats are provided in a drop down menu (8).

8. A television system according to claim 7 **characterised in that** the drop down menu (8) is provided in a viewing preference screen for selection therefrom.

9. A television system according to claim 1 **characterised in that** the different video display formats include any or any combination of a normal (4:3) display, a widescreen (16:9) display, picture handling display, pass through display, centre cut-out display or letterbox display.

10. A television system according to claim 1 **characterised in that** the format of the video display on the display screen (2) returns to a default video display format each time the television system is switched off and subsequently switched on again.

11. A television system according to claim 1 **characterised in that** the format of the video display on the display screen (2) returns to a default video display format after a pre-determined period of time.

12. A television system according to claim 1 **characterised in that** the format of the video display selected by the user is maintained on all video displays until a different video display format is selected.

13. A television system according to claim 1 **characterised in that** in addition to the different video display formats, the user can select the video display to be in a RGB or composite video display format.

14. A broadcast data receiver (BDR) for receiving broadcast data from a remote location via cable, satellite or terrestrial means and processing said data, said processed data including video data for display on a display screen (2) connected to or forming part of said BDR and **characterised in that** a plurality of different video display formats are provided for user selection on the display screen (2) and wherein upon selection of a particular video display format a preview of the resulting video display is displayed in a window (6) on the display screen (2).

15. An electronic programme guide (EPG) for display on a display screen (2) of a television system, said EPG displaying data relating to one or more channels and/or programmes for broadcasting at that time or in the future, said EPG having a menu (8) including a number of user-selectable preferences and **characterised in that** the user-selectable preferences include a plurality of different video display formats for user selection on the display screen (2) and wherein upon selection of a particular video display format a preview of the resulting video display is displayed in a window (6) on the display screen of the EPG.
